# EUROPEAN PATENT APPLICATION

(11) **EP 3 001 342 A1**
(43) Date of publication of application: **30.03.2016**
(21) Application number: 15184531.0
(22) Date of filing: 09.09.2015
(51) Int. Cl.: G06F 21/32, G06F 21/60, H04L 29/06

(54) **METHODS AND SYSTEMS FOR DISPLAYING BIOMETRIC DATA DURING CAPTURE**

(30) Priority: 23.09.2014 US 201414493401
(71) Applicant: Daon Holdings Limited, George Town, Grand Cayman (KY)
(72) Inventor: DURKAN, Justin, Co. Kildare (IE)
(74) Representative: Moore, Barry

(57) **Abstract**

A method for displaying biometric data during capture is provided that includes executing, using a terminal device, an Internet browser application and a biometric capture service application installed on the terminal device. The method also includes creating a two-way data-exchange channel between the Internet browser application and the biometric capture service application, and capturing, using a capture device, biometric data from a user and transmitting the captured data to the capture service application during capture. Moreover, the method includes transmitting the captured data over the two-way data-exchange channel to the Internet browser application and displaying the captured data on the terminal device during capture. The Internet browser application causes the terminal device to display the captured data.

## Description

### BACKGROUND OF THE INVENTION

This invention relates generally to displaying captured biometric data, and more particularly, to methods and systems for displaying biometric data during capture.

Generally, authentication stations include a personal computer and a biometric capture device connected to the computer over a cable or the like. During authentication transactions, captured biometric data is transmitted from the capture device to the personal computer for processing. The captured data may be processed for storage in the computer and for display as a live image, for example, a digital photograph or video. Such live images are typically displayed on personal computers at authentication stations without using Internet browser applications.

Internet browser applications installed on personal computers have been known to communicate with and control only web camera and microphone biometric data capture devices that are connected to or fitted into a computer. Consequently, Internet browser applications generally cannot communicate with and control most types of biometric data capture devices. Such other types of capture devices may capture data for different biometric characteristics including fingerprints, iris, retina, palm, DNA sequences, and gait patterns. Thus, Internet browser applications installed on personal computers at authentication stations generally cannot receive, process, and arrange to display biometric data for many different biometric characteristics as a live image on the computer.

Browser plug-ins have been developed that allow Internet browser applications to communicate with many different types of biometric capture devices in order to receive captured biometric data for many different biometric characteristics and process that data for display as a live image on the computer. Such browser plug-ins facilitate interaction between biometric capture devices and Internet browser applications, and hence facilitate receiving and processing live images by Internet browser applications. However, such browser plug-ins are known to be insecure and to represent a significant security risk to computer systems. As a result, browser plug-in use is strongly discouraged by many organizations.

As an alternative to using browser plug-ins, server push techniques have been developed that push captured biometric data from the capture device to a JavaScript in Internet browser applications. Although generally secure, such push techniques cannot accommodate multiple live biometric image feedback frames per second and are thus very slow. Consequently, due to poor security and slow display speeds, known techniques of displaying live images of captured biometric data for many different biometric modalities via Internet browser applications are of limited usefulness.

### BRIEF DESCRIPTION OF THE INVENTION

In one aspect, a method for displaying biometric data during capture is provided that includes executing, using a terminal device, an Internet browser application and a biometric capture service application installed on the terminal device. The method also includes creating a two-way data-exchange channel between the Internet browser application and the biometric capture service application, and capturing, using a capture device, biometric data from a user and transmitting the captured data to the capture service application during capture. Moreover, the method includes transmitting the captured data over the two-way data-exchange channel to the Internet browser application, and displaying the captured data on the terminal device during capture. The Internet browser application causes the terminal device to display the captured data.

In another aspect, a system for displaying biometric data during capture is provided that includes a terminal device configured to execute an Internet browser application and a biometric capture service application to create a two-way data-exchange channel between the applications. Moreover, the system includes a biometric capture device configured to capture biometric data from a user and transmit the captured data to the capture service application while capturing the data. The captured data is transmitted to the Internet browser application over the two-way data-exchange channel and the Internet browser application causes the terminal device to display the captured data.

In yet another aspect, a method for displaying biometric data during capture is provided that includes executing, using a first terminal device, a biometric capture service application stored therein, and executing, using a second terminal device, an Internet browser application stored therein. The method also includes creating a two-way data-exchange channel via the network between the Internet browser application and the biometric capture service application, and capturing, using a capture device, biometric data from a user and transmitting the captured data to the biometric capture service application during capture. Moreover, the method includes transmitting the captured data from the biometric capture service application to the Internet browser application over the two-way data-exchange channel, and displaying the captured data on the second terminal device during capture. The Internet browser application causes the second terminal device to display the captured data.

Accordingly there is provided a method, system and computer program as detailed in the claims.

### BRIEF DESCRIPTION OF THE DRAWINGS

Figure 1 is a diagram of an exemplary Biometric Authentication Computer System for displaying biometric data during capture;
Figure 2 is a diagram of an alternative exemplary Biometric Authentication Computer System for displaying biometric data during capture;
Figure 3 is a flowchart illustrating an exemplary method for displaying biometric data during capture; and
Figure 4 is a flowchart illustrating an alternative exemplary method for displaying biometric data during capture.

### DETAILED DESCRIPTION OF THE INVENTION

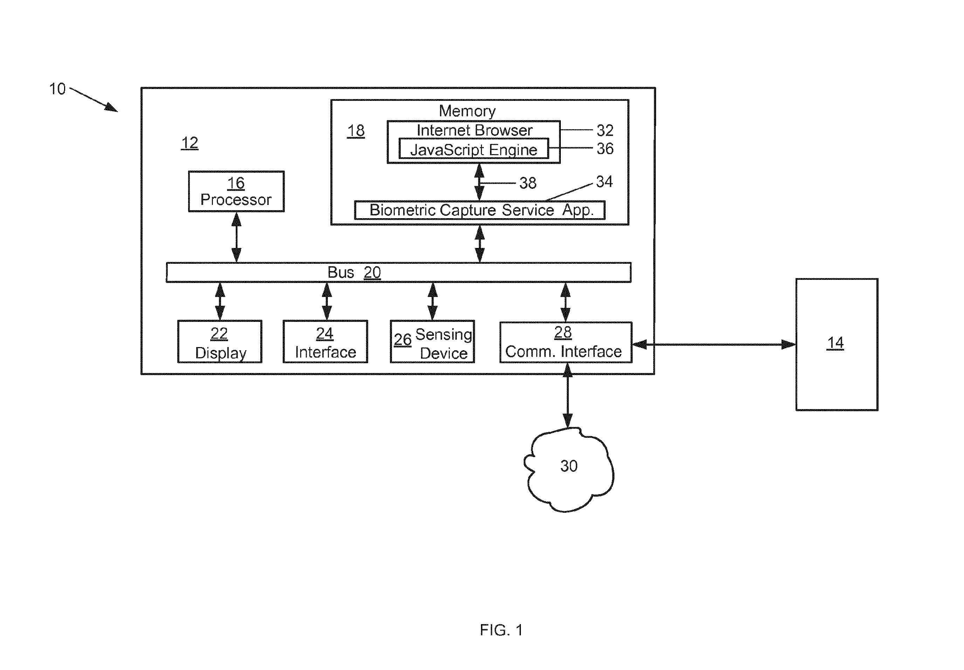

Figure 1 is a diagram of an exemplary Biometric Authentication Computer (BAC) System 10 for displaying biometric data during capture. The exemplary BAC system 10 includes a terminal device 12 and a biometric data capture device 14. The terminal device 12 includes at least one or more processors 16, a memory 18, a bus 20, a display 22, a user interface 24, a sensing device 26 and a communications interface 28. The terminal device 12 may be any device capable of processing biometric data captured from users and displaying the data as a live image during capture. Such devices include, but are not limited to, a smart phone, a cellular phone, a tablet computer, a phablet computer, a laptop computer, a personal computer (PC), and any type of device having wired or wireless networking capabilities such as a personal digital assistant (PDA). Moreover, the terminal device 12 may be portable or stationary and is associated with at least one user. Furthermore, the terminal device 12 communicates with other devices (not shown) and systems (not shown) over a communications network 30.

The processor 16 executes instructions, or computer programs, stored in the memory 18. As used herein, the term processor is not limited to just those integrated circuits referred to in the art as a processor, but broadly refers to a computer, a microcontroller, a microcomputer, a programmable logic controller, an application specific integrated circuit, and any other programmable circuit capable of executing the functions described herein. The above examples are exemplary only, and are thus not intended to limit in any way the definition and/or meaning of the term "processor." General communication between the components in the terminal device 12 is provided via the bus 20.

The memory 18 may be a computer-readable recording medium used to store data and computer programs or executable instructions. The memory 18 may store any information that may be used to authenticate users as described herein. For example, the memory 18 may store enrollment data records of users. Each enrollment data record may include any kind of data, for example, authentication data that may be used to authenticate the identity of users.

Authentication data may be any kind of information that may be used to authenticate users such as, but not limited to, Global Positioning System (GPS) coordinates, pass-phrases, biometric authentication data, and any combination thereof. Biometric authentication data may correspond to any biometric characteristic desired to be used as a basis of authentication such as, but not limited to, voice, face, finger, iris, palm, DNA, gait, signature and electrocardiogram, and any combination of voice, face, finger, iris, palm, DNA, gait, signature and electrocardiogram. The biometric authentication data may take any form such as, but not limited to, audio recordings, photographic images, video, and information that may be derived therefrom. Such derived data includes, but is not limited to, voice analyses, image enhancements, or video timelines. The authentication data requirement is the authentication data desired to be captured from users during authentication transactions. The authentication data requirement may be any type of authentication data, or any combination of different types of authentication data and may be determined in any manner by the terminal device 12.

As used herein, the term "computer program" is intended to encompass an executable program that exists permanently or temporarily on any computer-readable recordable medium that causes the terminal device 12 to perform at least the functions described herein. Application programs, also known as applications, are computer programs stored in the memory 18. Application programs include, but are not limited to, an operating system, an Internet browser application 32, a biometric capture service application 34, enrollment applications, authentication applications, or any special computer program that manages the relationship between application software and any suitable variety of hardware that helps to make-up a computer system or computing environment.

The Internet browser application 32 includes at least a JavaScript Engine application 36 and other JavaScript applications that facilitate establishing two-way communications between the Internet browser application 32 and the biometric capture service application 34 while the Internet browser 32 and capture service 34 applications are executed by the processor 16.

The memory 18 may be implemented using any appropriate combination of alterable, volatile or non-volatile memory or non-alterable, or fixed, memory. The alterable memory, whether volatile or non-volatile, can be implemented using any one or more of static or dynamic RAM (Random Access Memory), a floppy disc and disc drive, a writeable or re-writeable optical disc and disc drive, a hard drive, flash memory or the like. Similarly, the non-alterable or fixed memory can be implemented using any one or more of ROM (Read-Only Memory), PROM (Programmable Read-Only Memory), EPROM (Erasable Programmable Read-Only Memory), EEPROM (Electrically Erasable Programmable Read-Only Memory), an optical ROM disc, such as a CD-ROM or DVD-ROM disc, and disc drive or the like. Furthermore, the memory 18 may include smart cards, SIMs or any other medium from which a computing device can read computer programs or executable instructions.

The display 22 and the user interface 24 allow interaction between a user and the terminal device 12. The display 22 may include a visual display or monitor that displays information to a user. For example, the display 22 may be a Liquid Crystal Display (LCD), active matrix display, plasma display, or cathode ray tube (CRT). The user interface 24 may include a keypad, a keyboard, a mouse, an infrared light source, a microphone, touch screen, cameras, and/or speakers. The sensing device 26 may include RFID components or systems for receiving information from other devices. The sensing device 26 may also include components with Bluetooth, Radio Frequency Identification (RFID), Near Field Communication (NFC), infrared, or other similar capabilities. It should be understood that the sensing device 26 may alternatively not be included in the terminal device 12.

The communications interface 28 provides the terminal device 12 with two-way data communications. Moreover, the communications interface 28 enables the terminal device 12 to conduct wireless communications such as cellular telephone calls and to wirelessly access the Internet over the network 30. By way of example, the communications interface 28 may be a digital subscriber line (DSL) card or modem, an integrated services digital network (ISDN) card, a cable modem, or a telephone modem to provide a data communication connection to a corresponding type of telephone line. As another example, the communications interface 28 may be a local area network (LAN) card (e.g., for Ethemet.TM. or an Asynchronous Transfer Model (ATM) network) to provide a data communication connection to a compatible LAN. As yet another example, the communications interface 28 may be a wire or a cable connecting the terminal device 12 with a LAN, or with accessories such as biometric capture devices. Thus, it should be understood that the communications interface 28 may enable the terminal device 12 to conduct any type of wireless or wired communications such as, but not limited to, accessing the Internet over the network 30.

Further, the communications interface 28 may include peripheral interface devices, such as a Universal Serial Bus (USB) interface, a PCMCIA (Personal Computer Memory Card International Association) interface, and the like. The communications interface 28 also allows the exchange of information across networks such as communications network 30. The exchange of information may involve the transmission of radio frequency (RF) signals through an antenna (not shown). Moreover, the exchange of information may be between the terminal device 12 and between any other systems (not shown) and devices (not shown) capable of communicating over the communications network 30. Such other devices (not shown) include, but are not limited to, smart phones, tablet computers, laptop computers, phablet computers, personal computers and cellular phones. Although the terminal device 12 includes a single communications interface 28, the terminal device 12 may alternatively include multiple communications interfaces 28.

The communications network 30 is a 4G communications network. Alternatively, the communications network 30 may be any wireless network including, but not limited to, 3G, Wi-Fi, Global System for Mobile (GSM), Enhanced Data for GSM Evolution (EDGE), and any combination of a LAN, a wide area network (WAN) and the Internet. The network 30 may also be any type of wired network or a combination of wired and wireless networks.

The biometric capture device 14 may be any device capable of capturing biometric data for any biometric characteristic in accordance with an authentication data requirement. For example, the biometric capture device 26 may be a camera, a microphone, a finger print scanner, a DNA reader, a gait analyzer, a signature scanner or an iris scanner. The biometric capture device 14 may be connected to the terminal device 12 using a cable or the like and communicate with the terminal device 12 over the cable. Alternatively, the biometric capture device 14 may not be connected to the terminal device 12 via a cable and may instead communicate with the terminal device 12 over the network 30. When the enrollment or authentication applications stored in the terminal device 12 require capturing biometric data, the biometric data is captured with the capture device 14 and is transmitted to the terminal device 12 for processing and/or display.

The biometric capture service application 34, when executed by the processor 16, creates a two-way data-exchange channel 38 with the Internet browser application 32, via the memory 18, while the Internet browser application 32 is also executed by the processor 16. The two-way data-exchange channel 38 uses the memory 18 to exchange data when the Internet browser application 32 and the biometric capture service application 34 are executed on the same terminal device. The internet browser application 32 may alternatively create the two-way data-exchange channel 38 with the biometric capture service application 34.

The data-exchange channel 38 enables the biometric capture service application 34 and the Internet browser application 32 to communicate with each other such that the Internet browser application 32 may cause the terminal device 12 to control any biometric capture device connected thereto. More specifically, the two-way data-exchange channel 38 enables the Internet browser 32 to receive asynchronous messages from the biometric capture service application 34 such that the Internet browser application 32 may cause the terminal device 12 to display live images of biometric data during capture. The asynchronous messages may be generated by the biometric capture service application 34 or may be generated by the capture device 14 and transmitted to the biometric capture service application 34. Thus, the two-way data-exchange channel 38 enables the Internet browser application 32 to receive captured biometric data and process the captured biometric data in any manner. For example, the Internet browser application 32 may process the captured biometric for display as a live image on the terminal device 12 during capture. The Internet browser application 32 may also generate asynchronous messages and transmit the generated messages to the biometric capture service application 34 over the data-exchange channel 38.

Each asynchronous message may include different information. For example, asynchronous messages generated by the capture device 14 may contain status information regarding the capture device 14 and live images of biometric data during capture. Status information includes, but is not limited to, indicating whether or not the capture device 14 is activated and whether or not the capture device 14 is adequately clean. Live images include, but are not limited to, a fingerprint image instantaneously captured by a fingerprint scanner or a video taken of a user while reciting an authentication data requirement. Information regarding the conditions of captured biometric data may also be included in asynchronous messages. For example, information regarding a captured fingerprint such as absent, partial, smudged, dirty, latent, valid, unacceptable and acceptable may be included in asynchronous messages.

Although the Internet browser application and the biometric capture service application are on the same terminal device 12 in the exemplary BAC system 10, in alternative exemplary BAC systems 10 that include more than one terminal device the Internet browser and the biometric service capture applications may be on different terminal devices.

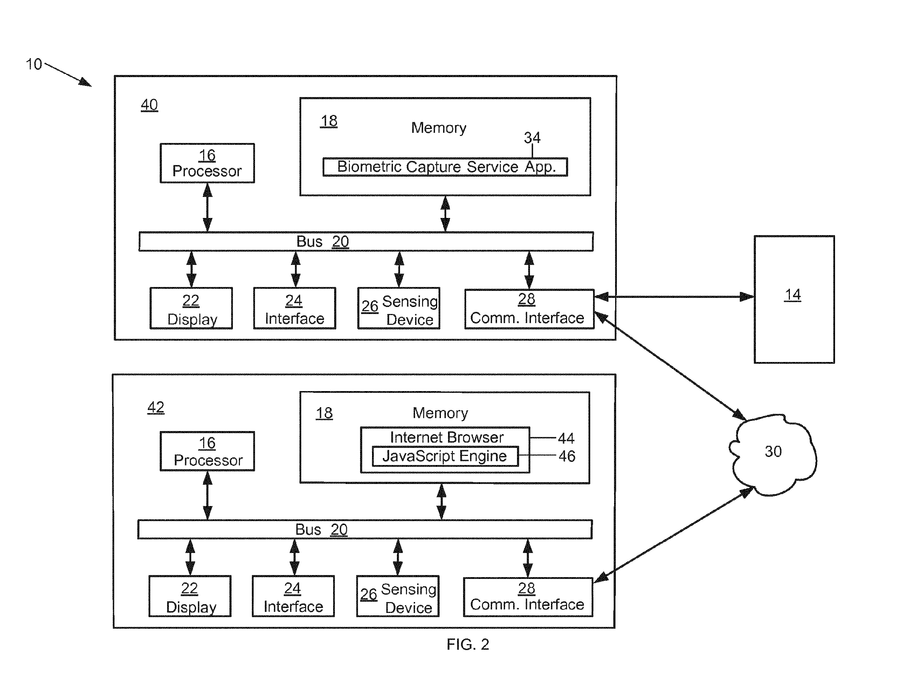

The information shown in Figure 2 is the same information shown in Figure 1 as described in more detail below. As such, features illustrated in Figure 2 that are identical to features illustrated in Figure 1 are identified using the same reference numerals used in Figure 1.

Figure 2 is a diagram of an alternative exemplary Biometric Application Computer (BAC) System 10 for displaying biometric data on a terminal device. More specifically, the BAC system 10 includes a first terminal device 40 and a second terminal device 42 remote from the first terminal device 40. The first and second terminal devices are substantially the same as the terminal device 12, communicate over the network 30, and may be associated with a same or different user. Although the alternative BAC system 10 includes two terminal devices, it should be understood that any number of terminal devices may be included in the BAC system 10.

The first terminal device 40 includes the biometric capture service application 34, does not include an Internet browser application, and is connected to the biometric data capture device 14 using a cable or the like. The first terminal device 40 and the capture device 14 communicate over the cable. The second terminal device 42 includes an Internet browser application 44 and a JavaScript Engine 46 that may be the same as or different than the Internet browser 32 and the JavaScript Engine 36, respectively. However, the second terminal device 42 does not include the biometric capture service application 34.

The second terminal device 42 may control biometric capture devices connected to the first terminal device 40 while the Internet browser application 44 is executed on the second terminal device 42 and while the biometric capture service application 34 is executed on the first terminal device 40. More specifically, the biometric capture service application 34, while being executed, creates a two-way data-exchange channel with the Internet browser application 44 via the network 30 while the Internet browser application 44 is executed on the second terminal device 42. Thus, the two-way data-exchange channel uses the network 30 to exchange data. The two-way data-exchange channel is the same as the data-exchange channel 38 created between the biometric capture service application 34 and the Internet browser 32 described herein with regard to Figure 1.

The data-exchange channel enables the second terminal device 42, the biometric capture service application 34, and the Internet browser application 44 to communicate with each other such that the Internet browser application 44 may cause the second terminal device 42 to control the capture device 14. More specifically, the two-way data-exchange channel enables the first terminal device 40 to receive messages from the Internet browser application 44 for controlling the capture device 14. The data-exchange channel also enables the second terminal device 42 to receive asynchronous messages from the capture device 14, and to communicate those asynchronous messages to the Internet browser application 44 such that the Internet browser application 44 may cause the second terminal device 42 to display live images of biometric data during capture. Thus, the two-way data-exchange channel enables the Internet browser application 44 to receive captured biometric data and other data that may be included in asynchronous messages. The captured biometric data may be processed in any manner. For example, the Internet browser application 44 may process the captured biometric for display as a live image on the second terminal device 44 during capture.

Creating the data-exchange channel via the network 30 facilitates transmitting live images of captured biometric data to the Internet browser application 44 for display as a live image on the second terminal device 42. Thus, it should be understood that captured biometric data may be displayed on a terminal device that is not connected to the biometric capture device 14 and that is remote from a terminal device connected to the capture device 14. Although the first terminal device 40 does not include an Internet browser application, the first terminal device 40 may alternatively include an Internet browser application that is the same as or different than the Internet browser applications 32, 44. However, it should be understood that an Internet browser application installed on the first terminal device 40 does not cause the second terminal device 42 to display biometric data captured by the capture device 14. Additionally, although the second terminal device 42 does not include the biometric capture service application 34, the second terminal device may alternatively include the biometric capture service application 34.

It should be understood that when the authentication data requirement is for voice biometric data a live image generally is not displayed. Instead, live audio of captured voice biometric data is generated or broadcast by the terminal device. Alternatively, a waveform or the like representing the voice biometric data may be displayed.

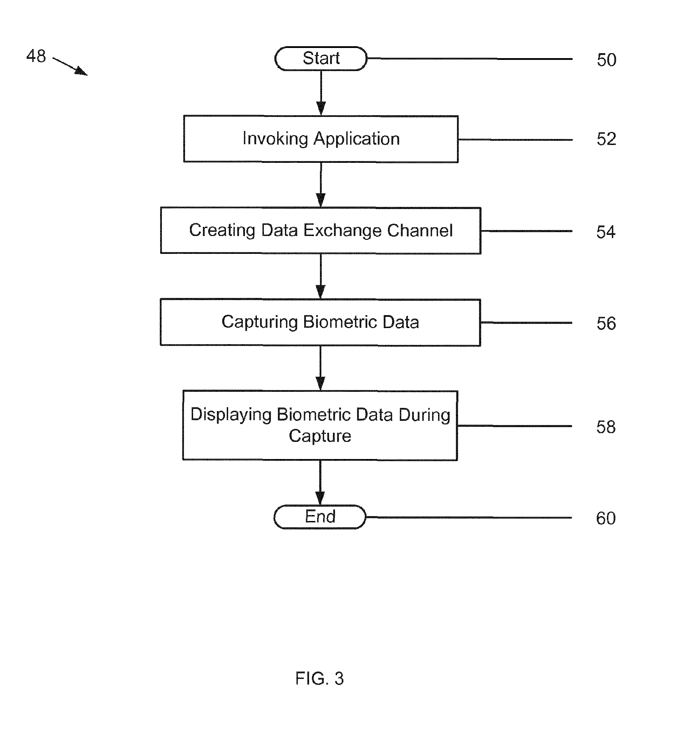

Figure 3 is a flowchart 48 illustrating an exemplary method for displaying biometric data on the terminal device 12 during capture from a user. The method starts 50 with a user invoking an application 52 stored on the terminal device 12 that requires capturing biometric data. For example, the invoked application may be an enrollment application that requires capturing biometric data during an enrollment process or an authentication application that requires capturing biometric authentication data during an authentication transaction. The invoked application requests the biometric capture service application 34 to create a data-exchange channel 38 with the Internet browser application 32, and in response the biometric capture service application 34 continues by creating 54 the data-exchange channel 38. Alternatively, the invoked application may request the Internet browser application 32 to create the data-exchange channel 38 with the biometric capture service application 34.

After creating 54 the data-exchange channel, the Internet browser application 32 causes the terminal device 12 to transmit a request for capturing biometric data to the capture device 14. The request includes at least an authentication data requirement. Next, the user continues by capturing 56 biometric data from his or her self in accordance with the authentication data requirement. While capturing 56 biometric data from the user with the capture device 14, the captured biometric data is transmitted to the Internet browser application 32 for processing. While processing the captured biometric data, the Internet browser application 32 causes the terminal device 12 to continue by displaying 58 the captured biometric data during capture by the capture device 14. Next, processing ends 60.

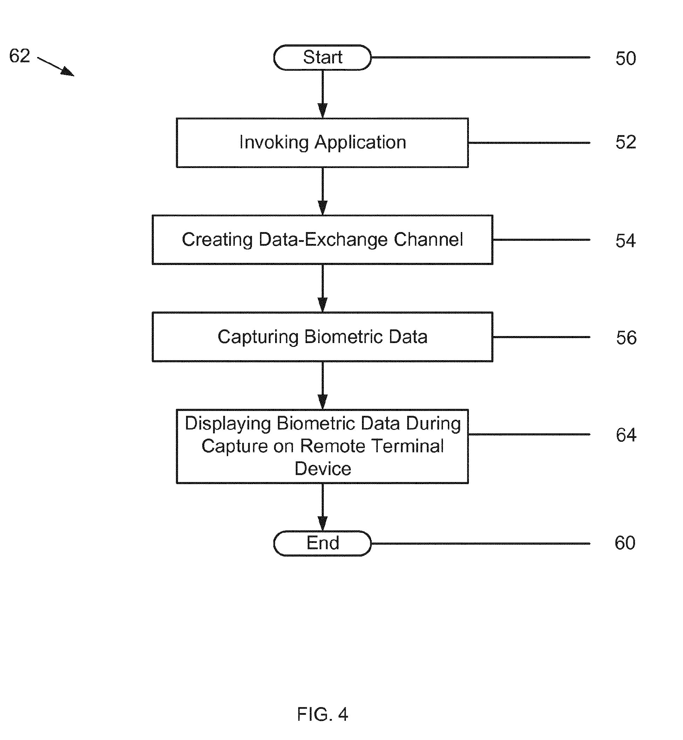

The information shown in Figure 4 is the same information shown in Figure 3 as described in more detail below. As such, features illustrated in Figure 4 that are identical to features illustrated in Figure 3 are identified using the same reference numerals used in Figure 3.

Figure 4 is a flowchart 62 illustrating an alternative exemplary method for displaying biometric data during capture. This alternative method is similar to that shown in Figure 3. However, instead of creating the data-exchange channel 38 between the Internet browser application 32 and the biometric capture service application 34, the data-exchange channel is created via the network 30 between the biometric capture service application 34 installed on the first terminal device 40 and the Internet browser application 44 on the second terminal device 42. More specifically, after receiving the request for creating a data-exchange channel, the biometric capture service application 34 creates a data-exchange channel with the Internet browser application 44 via the network 30. Alternatively, the internet browser application 44 may create the data-exchange channel with the biometric capture service application 34.

While capturing 56 biometric data from the user with the capture device 14, the captured data is transmitted to the Internet browser application 44 for processing. While processing the captured data, the Internet browser application 44 causes the second terminal device 42 to display 64 the captured biometric data during capture by the device 14. Thus, it should be understood that biometric data may be displayed during capture on a terminal device that is not connected to the capture device 14 and is remote from the terminal device that is connected to the capture device 14. Next, processing ends 60.

In each embodiment, the above-described methods and systems for displaying biometric data facilitate reducing security risks and enhancing display speed when displaying biometric data through an Internet browser application while capturing data for any biometric characteristic from a user. More specifically, a data-exchange channel is created between an Internet browser application and a biometric capture service application that are both executed by a same terminal device or by different terminal devices. Next, biometric data is captured from a user and is transmitted to the Internet browser application. The Internet browser application causes the terminal device to display the biometric data on the terminal device executing the Internet browser application while the biometric data is captured. As a result, a live image corresponding to any biometric characteristic may be displayed on a terminal device through the Internet browser application while the biometric data is captured.

The exemplary embodiments of methods for displaying biometric data described above should not be considered to imply a fixed order for performing the process steps. Rather, the process steps may be performed in any order that is practicable, including simultaneous performance of at least some steps. Moreover, the methods are not limited to use with the specific computer systems described herein, but rather, the methods can be utilized independently and separately from other computer components described herein. Furthermore, the invention is not limited to the embodiments of the methods described above in detail. Rather, other variations of the methods may be utilized within the spirit and scope of the claims.

While the invention has been described in terms of various specific embodiments, those skilled in the art will recognize that the invention can be practiced with modification within the spirit and scope of the claims.

## Claims

1. A method for displaying biometric data during capture comprising:
executing, using a terminal device, an Internet browser application;
creating a two-way data-exchange channel between the Internet browser application and a biometric capture service application;
capturing, using a capture device, biometric data from a user and transmitting the captured data to the biometric capture service application during capture;
transmitting the captured data over the two-way data-exchange channel to the Internet browser application; and
displaying the captured data on the terminal device during capture, wherein the Internet browser application causes the terminal device to display the captured data.

2. A method in accordance with claim 1 further comprising invoking an application that requires capturing biometric data.

3. A method in accordance with claim 1 or 2 further comprising requesting opening of a two-way data-exchange channel between the Internet browser and biometric capture service application.

4. A method in accordance with any preceding claim further comprising:
transmitting an asynchronous message from the Internet browser application to the biometric capture service application;
generating, by the biometric capture service application, a response to the asynchronous message; and
receiving, by the Internet browser application, the response from the biometric capture service application.

5. A method in accordance with any preceding claim wherein the biometric capture service application is installed on the terminal device on which the Internet browser application is executed.

6. A method in accordance with any one of claims 1 to 4 wherein the biometric capture service application is installed on a first terminal device and the Internet browser application is installed and executed on a second terminal device.

7. A method in accordance with claim 6 comprising:
executing, using the first terminal device, the biometric capture service application;
executing, using the second terminal device, the Internet browser application;
creating a two-way data-exchange channel via a network between the Internet browser application and the biometric capture service application;
capturing, using the capture device, biometric data from a user and transmitting the captured data to the biometric capture service application during capture;
transmitting the captured data from the biometric capture service application to the Internet browser application over the two-way data-exchange channel; and
displaying the captured data on the second terminal device during capture, wherein the Internet browser application causes the second terminal device to display the captured data.

8. A method in accordance with claim 7 further comprising:
transmitting an asynchronous message from the capture device to the Internet browser application; and
receiving, by the Internet browser application, the asynchronous message.

9. A system for displaying biometric data during capture comprising:
a terminal device configured to execute an Internet browser application and a biometric capture service application to create a two-way data-exchange channel between the applications; and
a biometric capture device configured to capture biometric data from a user and transmit the captured data to the capture service application while capturing the data, wherein the captured data is transmitted to the Internet browser application over the two-way data-exchange channel and the Internet browser application causes said terminal device to display the captured data.

10. A system in accordance with claim 9 wherein said biometric data capture device is further configured to transmit asynchronous messages to the Internet browser application over the two-way data-exchange channel and the Internet browser application is configured to receive the asynchronous messages.

11. A system in accordance with claim 9 or 10 wherein said terminal device comprises:
a smart phone;
a tablet computer;
a personal computer;
a laptop computer; or
a phablet computer.

12. A computer program that when executed on one or more computing devices is configured to carry out the method of any one of claims 1 to 8.
